# EUROPEAN PATENT APPLICATION

(11) **EP 4 772 339 A1**
(43) Date of publication of application: **08.07.2026**
(21) Application number: 25209634.2
(22) Date of filing: 19.10.2025
(51) Int. Cl.: B32B 7/06, B32B 7/05, B32B 7/12, B32B 27/28, B32B 27/32, B32B 27/34, B32B 27/36, C09J 7/35

(54) **EASY-OPEN TYPE CLOSURE LINER**

(30) Priority: 06.01.2025 TW 114100517
(71) Applicant: Yang, Yen-Wu, 221 New Taipei City (TW)
(72) Inventor: Yang, Yen-Wu, 221 New Taipei City (TW)
(74) Representative: DTS Patent- und Rechtsanwälte PartmbB

(57) **Abstract**

The present application provides an easy-open type closure liner (50), which includes an upper layer (100), a bonding layer (200) and a sealing laminated layer (300) in a sequence from top to bottom. The upper layer (100) includes a surface film (110). The bonding layer (200) includes a bonding adhesive (210). The sealing laminated layer (300) includes a lower bonding film (330), an electromagnetic induction heating layer (310), and a sealing layer (320) in a sequence from top to bottom. The bonding layer (200) laminates the upper layer (100) with the sealing laminated layer (300) through the bonding adhesive (210), and an un-bonded area (UA) is formed between the upper layer (100) and the sealing laminated layer (300). The easy-open type closure liner (50) can improve the convenience for a user to open.

## Description

### BACKGROUND OF THE INVENTION

### 1. Field of the Invention

The present application relates to a closure liner, and particularly relates to an easy-open type closure liner.

### 2. Description of the Related Art

In order to prevent contents from leaking and deteriorating due to the influence of the external environment, openings of a beverage can, a medicine can and other packaging containers will be sealed with closure liners. Moreover, generally, the closure liners are made of materials such as aluminum foil or cardboard.

By tightly fitting the closure liner to the container opening, it can achieve of the effects of preventing the contents from leaking and preserving the contents tightly.

### BRIEF SUMMARY OF THE INVENTION

However, because the conventional design of a closure liner is mainly considered for sealing, but not for the ease of opening, the aluminum foil or cardboard at an opening of the container is not easy to open with fingers, and it is cumbersome and dangerous to cut with a knife or poke with an awl, resulting in inconvenience for users.

Therefore, how to solve the above-mentioned problems on the conventional closure liner, and effectively improve the convenience of opening, has become a problem urgently to be solved in the technical field.

In order to solve the above-mentioned problems, the present application provides an easy-open type closure liner, which includes an upper layer, a bonding layer, and a sealing laminated layer in a sequence from top to bottom. The upper layer includes a surface film. The bonding layer includes a bonding adhesive. The sealing laminated layer includes a lower bonding film, an electromagnetic induction heating layer, and a sealing layer in a sequence from top to bottom. The bonding layer laminates the upper layer with the sealing laminated layer through the bonding adhesive, and an un-bonded area is formed between the upper layer and the sealing laminated layer.

In some embodiments, the section width of a coating range of the bonding adhesive is greater than or equal to one-sixth of the section width of the easy-open type closure liner, and the section width of the coating range of the bonding adhesive is smaller than or equal to five-sixths of the section width of the easy-open type closure liner.

In some embodiments, the bonding layer further includes an interlayer and a coating layer. The interlayer is disposed in the un-bonded area, and is laminated with the upper layer through a lamination adhesive. The coating layer is coated on a lower surface of the interlayer. The material of the interlayer is at least one selected from the group consisting of Polyethylene Terephthalate (PET), Polypropylene (PP), Polyamide (PA), Polyethylene Naphthalate (PEN), and Polyimide (PI). The material of the coating layer is gloss oil or silicone oil.

In some embodiments, the bonding layer further includes an interlayer and a coating layer. The interlayer is disposed in the un-bonded area, and is laminated with the sealing laminated layer through the lamination adhesive. The coating layer is coated on an upper surface of the interlayer. The material of interlayer is at least one selected from the group consisting of PET, PP, PA, PEN, and PI. The material of the coating layer is gloss oil or silicone oil.

In some embodiments, the bonding layer further includes the coating layer. The coating layer is coated on a lower surface of the upper layer or an upper surface of the sealing laminated layer. The material of the coating layer is gloss oil or silicone oil.

In some embodiments, the coating mode of the coating layer is full coating or dot coating.

In some embodiments, the section width of a coating range of the coating layer is greater than or equal to one-sixth of the section width of the easy-open type closure liner, and the section width of the coating range of the coating layer is smaller than or equal to five-sixths of the section width of the easy-open type closure liner.

In some embodiments, the material of the lower bonding film is at least one selected from the group consisting of Polyethylene (PE), PP, PET, PA, Expandaple Polyproplene (EPP), and Expandable Polyethylene (EPE).

In some embodiments, the sealing laminated layer further includes a laminated film. The laminated film is disposed above the electromagnetic induction heating layer. The material of the laminated film is at least one selected from the group consisting of PET, PP, PA, PEN, and PE.

In some embodiments, the bonding adhesive is a dry compound adhesive or a hot melt lamination glue, and the material of the hot melt lamination glue is at least one selected from the group consisting of PE, PP, Ethylene-Methyl Acrylate Copolymer (EMAC), Ethylene Methacrylic Acid Copolymer (EMAA), Ethylene Acrylic Acid copolymer (EAA), Ethylene Ethyl Acrylate Copolymer (EEA), and Ethylene Methyl Methacrylate (EMMA).

In some embodiments, the material of the surface film is at least one selected from the group consisting of PP, PET, PE, PA, PEN, PI, and EMAC.

In some embodiments, the sealing layer is a hot melt glue or a combination of a sealing film and an adhesive, the material of the hot melt glue is at least one selected from the group consisting of Ethylene Vinyl Acetate copolymer (EVA), Polyisobutylene (PIB), Ethylene Butyl Acrylate Copolymer (EBA), EAA, EMAC, Polyacrylate, PolyAcetate, and EMAA, the material of the sealing film is at least one selected from the group consisting of PE, PP, PA, Polyvinylidene Chloride (PVDC), Ethylene Vinyl Alcohol Copolymer (EVOH), and PET, and the adhesive is disposed between the sealing film and the electromagnetic induction heating layer.

In some embodiments, through the bonding adhesive, the peel strength between the upper layer and the sealing laminated layer is greater than or equal to 17.8 N/15 mm.

In some embodiments, the electromagnetic induction heating layer is aluminum foil or a wireless information integrated flake.

In some embodiments, the wireless information integrated flake includes a base film, an information and heating layer, and a first adhesive layer. The information and heating layer includes an information area and an electromagnetic induction heating ring. The first adhesive layer is located between the base film and the information and heating layer. The information area is provided with an antenna and a chip which are electrically interconnected, and the electromagnetic induction heating ring surrounds the information area in a plane view angle.

In some embodiments, the wireless information integrated flake further includes a protective layer and a second adhesive layer, the protective layer is located on one side, away from the base film, of the information and heating layer, and the second adhesive layer is located between the information and heating layer and the protective layer.

In some embodiments, a spacing is formed between the electromagnetic induction heating ring and the information area. Moreover, in some embodiments, the spacing is a space between the outermost edge of the information area and the innermost edge of the electromagnetic induction heating ring, and ranges from 0.1 mm to 3 mm. Moreover, in some preferred embodiments, the spacing fully occupies the position between the electromagnetic induction heating ring and the information area.

In some embodiments, the information and heating layer further includes at least one physical connecting bridge which is used for connecting the information area to the electromagnetic induction heating ring.

With adoption of the easy-open type closure liner provided by the present application, those with ordinary knowledge in the art of the present application can prevent the contents from leaking and deteriorating due to the influence of the external environment, and a user can directly pinch a half-moon pull valve (i.e., the structure of the upper layer of the part above the un-bonded area) by hand to easily peel off the easy-open type closure liner of a container opening without the help of external objects, thereby further realizing the effect of facilitating opening.

One of aspects in the present application is proposed based on the problem points in the conventional technology, and it aims to provide an easy-open type closure liner that can further improve the convenience for the user to open. In other words, the easy-open type closure liner provided by the present application can take into account the tightness of the preserved contents, and the convenience for the user to open.

### BRIEF DESCRIPTION OF THE DRAWINGS

FIG. 1 is a schematic cross-sectional diagram of an easy-open type closure liner according to Embodiment 1 of the present application.
FIG. 2A is a schematic cross-sectional diagram of an easy-open type closure liner according to Embodiment 2 of the present application.
FIG. 2B is a schematic cross-sectional diagram of an easy-open type closure liner according to Embodiment 3 of the present application.
FIG. 2C is a schematic cross-sectional diagram of local change of an easy-open type closure liner shown in FIG. 2A.
FIG. 2D is a schematic cross-sectional diagram of local change of an easy-open type closure liner shown in FIG. 2B.
FIG. 3 is a schematic cross-sectional diagram of an easy-open type closure liner according to Embodiment 4 of the present application.
FIG. 4A is a schematic cross-sectional diagram of an easy-open type closure liner according to Embodiment 5 of the present application.
FIG. 4B is a schematic cross-sectional diagram of local change of an easy-open type closure liner shown in FIG. 4A.
FIG. 5A to FIG. 5B are side views of an easy-open type closure liner according to Specific Example 1 of the present application.
FIG. 6A to FIG. 6B are side views of an easy-open type closure liner according to Specific Example 2 of the present application.
FIG. 7 is a schematic cross-sectional diagram of a wireless information integrated flake according to Embodiment 1 of the present application.
FIG. 8A is a schematic plan diagram of a specific example of an information and heating layer according to the present application.
FIG. 8B is a schematic plan diagram of another specific example of an information and heating layer according to the present application.
FIG. 9A is a schematic plan diagram of a specific example of an information area according to the present application.
FIG. 9B is a schematic plan diagram of another specific example of an information area according to the present application.
FIG. 10 is a schematic cross-sectional diagram of a wireless information integrated flake according to Embodiment 2 of the present application.

### DETAILED DESCRIPTION OF THE INVENTION

The implementations of the present application are described below with specific embodiments, and those familiar with this skill can understand other advantages and effects of the present application from the contents disclosed in the description. The present application may also be implemented or applied with other different specific embodiments, and the details in the description may also be modified and changed based on different views and applications, without departing from the spirit of the present application.

Unless otherwise specified in the text, the term "A to B" used in the description and the accompanying claims includes the meaning of "above A and below B". For example, the term "10 wt% to 40 wt%" includes the meaning of "greater than 10 wt% and less than 40 wt%".

In addition, in the context described in the present application, it is to be noted that terms such as "first", "second", and "third" are used for distinguishing elements, and not to limit the elements themselves or to indicate a particular order of elements. It is to be noted that in the description described below, the same component or step can be represented with the same number.

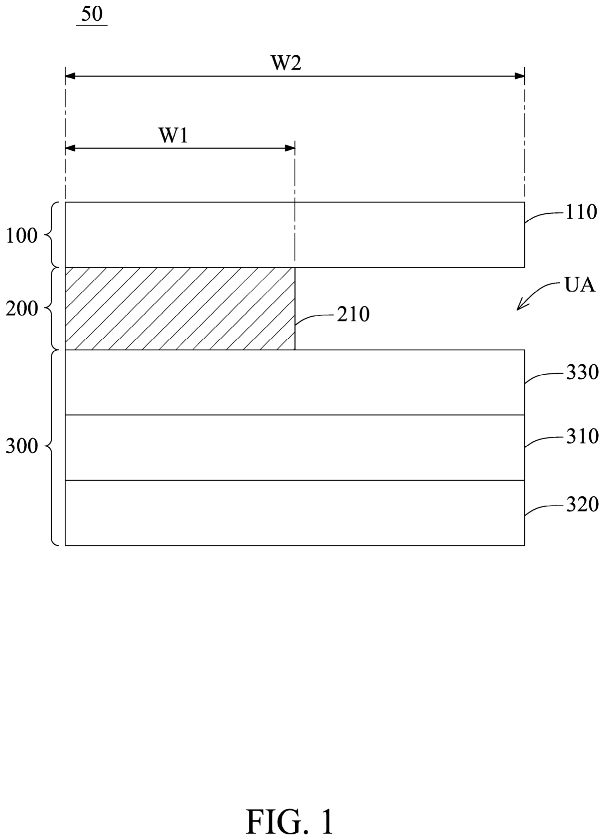

Please refer to FIG. 1, FIG. 1 is a schematic cross-sectional diagram of an easy-open type closure liner 50 according to Embodiment 1 of the present application. As shown in FIG. 1, the easy-open type closure liner 50 includes an upper layer 100, a bonding layer 200, and a sealing laminated layer 300 in a sequence from top to bottom. The upper layer 100 includes a surface film 110, the bonding layer 200 includes a bonding adhesive 210, and the sealing laminated layer 300 includes a lower bonding film 330, an electromagnetic induction heating layer 310, and a sealing layer 320 in a sequence from top to bottom. Each structure will be described in more detail below.

### <<Upper layer 100>>

The upper layer 100 is disposed on the uppermost layer of the easy-open type closure liner 50. As shown in FIG. 1, the upper layer 100 includes the surface film 110 which is used as the uppermost layer (i.e., a surface layer) of the easy-open type closure liner 50. In some embodiments, an upper surface and/or a lower surface of the surface film 110 may be printing surfaces, which can be used for printing different patterns. In some embodiments, the material of the surface film 110 may be at least one selected from the group consisting of PP, PET, PE, PA, PEN, PI, and EMAC. Moreover, the thickness of the surface film 110 is preferably 12 µm to 150 µm. Within this range, the tensile strength is large, the surface is flat, and the brightness is good. Additionally, when heat conduction is sensed below the easy-open type closure liner 50, the surface film 110 can be prevented from being adhered to other external elements (such as bottle caps).

### <<Bonding layer 200>>

The bonding layer 200 is disposed between the upper layer 100 and the sealing laminated layer 300. Taking FIG. 1 as an example, the bonding layer 200 includes the bonding adhesive 210, the bonding layer 200 can laminate the upper layer 100 with the sealing laminated layer 300 through the bonding adhesive 210, and an un-bonded area UA is formed between the upper layer and the sealing laminated layer 300. Therefore, some areas between the upper layer 100 and the sealing laminated layer 300 are separated from each other (i.e., in a state of not being completely laminated with each other). Then, the user can directly easily peel off the easy-open type closure liner 50 by hand without the help of external objects. In some embodiments, the easy-open type closure liner 50 may allow the peel strength between the upper layer 100 and the sealing laminated layer 300 to be greater than or equal to 17.8 N/15 mm through the bonding adhesive 210, thereby stably laminating the upper layer 100 with the sealing laminated layer 300. In some embodiments, the bonding adhesive 210 may be a jointing adhesive that allows the peel strength between the upper layer 100 and the sealing laminated layer 300 to be greater than or equal to 17.8 N/15 mm, but is not limited thereto. In some embodiments, the bonding adhesive 210 may be a dry compound adhesive, but is not limited thereto. In some other embodiments, the bonding adhesive 210 may be a hot melt lamination glue, and the material of the hot melt lamination glue may be at least one selected from the group consisting of PE, PP, EMAC, EMAA, EAA, EEA, and EMMA. Moreover, the thickness of the hot melt lamination glue is preferably 4 µm to 60 µm.

### <<Sealing laminated layer 300>>

The sealing laminated layer 300 is disposed on the lowest layer of the easy-open type closure liner 50. Taking FIG. 1 as an example, the sealing laminated layer 300 includes the lower bonding film 330, the electromagnetic induction heating layer 310, and the sealing layer 320 in a sequence from top to bottom. The electromagnetic induction heating layer 310 may be aluminum foil or a wireless information integrated flake. The aluminum foil is of an existing structure in the conventional closure liner, and the thickness of the aluminum foil is preferably 10 µm to 40 µm, so that the blocking function for moisture and oxygen can be enhanced, and the effects of preventing contents from leaking and preserving the contents tightly are achieved. Moreover, according to the present application, the wireless information integrated flake can be used for replacing the aluminum foil, so that the use amount of the aluminum foil can be effectively reduced, and the energy consumption is reduced. Specifically, by means of the wireless information integrated flake according to the present application, the wireless information transmission function can be added, the waste of aluminum foil materials can be reduced, the energy consumption is reduced, the waste of manpower is avoided, the interference of metal and liquid is avoided, the production efficiency is improved, the communication performance is good, the communication distance is greatly increased, and the development of automation, digitization and intelligence of factories, warehouses, logistics, shops and unmanned cashier management is greatly improved. In some embodiments, the thickness of the wireless information integrated flake is preferably 27 µm to 2.5 mm.

The sealing layer 320 is mainly used for sealing a container opening. In some embodiments, the sealing layer 320 may be, for example, a hot melt glue. The material of the hot melt glue may be at least one selected from the group consisting of EVA, PIB, EBA, EAA, EMAC, Polyacrylate, Polyacetate, and EMAA, but is not limited thereto. Moreover, the thickness of the hot melt glue is preferably 4 µm to 100 µm. Through some types of provided hot melt glue, the adhesive is not needed, and even if the content of a glass container contains water, a continuous sealing effect can be achieved; and when the content of the glass container contains hot pepper, garlic, fermented bean curd, honey and spicy additives, the continuous sealing effect can also be achieved.

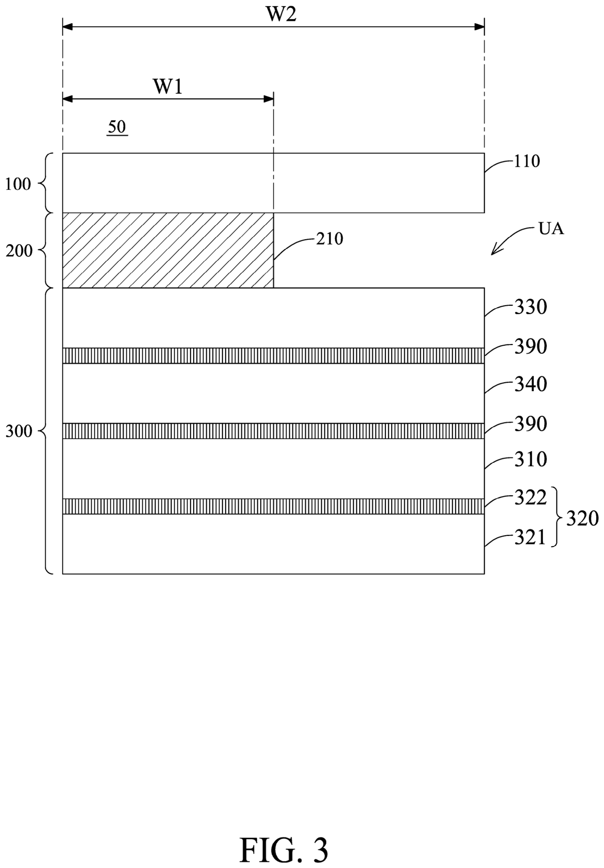

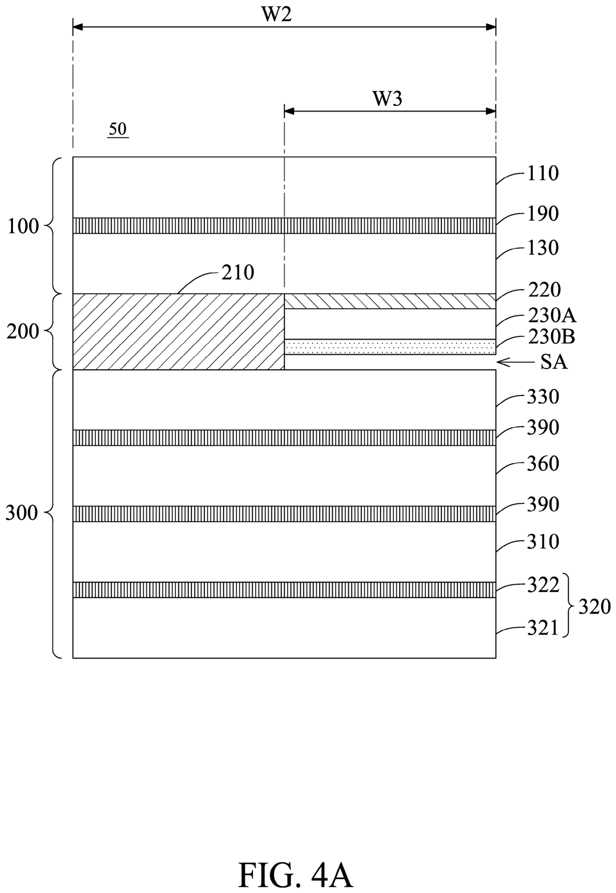

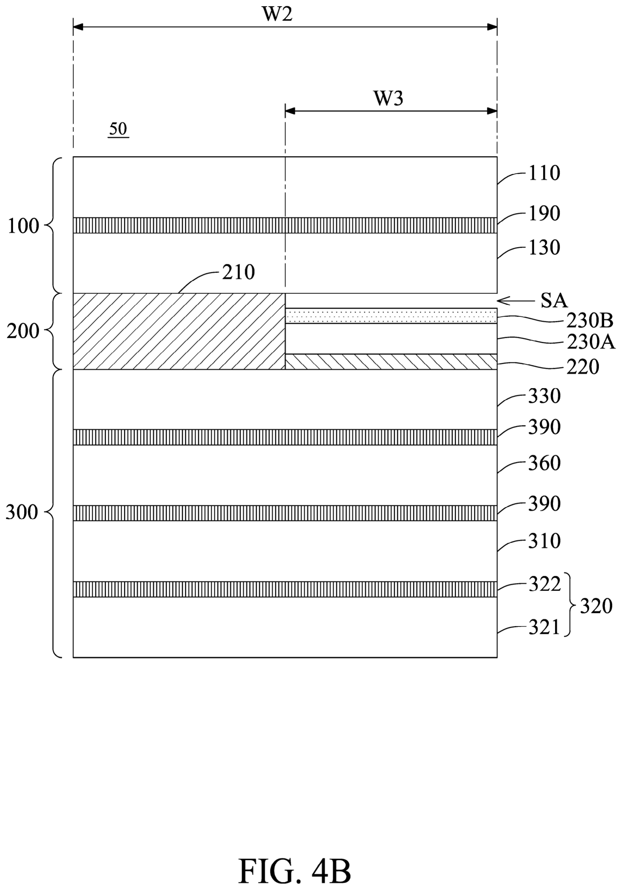

Moreover, in another embodiment (such as FIG. 3, FIG. 4A, or FIG. 4B), taking FIG. 3 as an example, the sealing layer 320 may be a combination of a sealing film 321 and an adhesive 322, and the adhesive 322 is disposed between the sealing film 321 and the electromagnetic induction heating layer 310. In some embodiments, the material of the sealing film 321 may be at least one selected from the group consisting of PE, PP, PA, PVDC, EVOH, and PET, and the thickness of the sealing film 321 is preferably 12 µm to 100 µm; and the adhesive 322 may be, for example, a laminating adhesive, but not limited thereto.

As described above, when the sealing layer 320 is made of the hot melt glue or the combination of the sealing film and the adhesive, the user can more easily peel off the easy-open type closure liner 50 from the bottle opening, or the user can more easily and cleanly peel off the easy-open type closure liner 50 from the bottle opening.

The lower bonding film 330 is disposed above the electromagnetic induction heating layer 310. In other words, the lower bonding film 330 may be directly laminated above the electromagnetic induction heating layer 310, and the lower bonding film 330 may also be indirectly laminated above the electromagnetic induction heating layer 310 (that is, other structures are disposed between the bonding film 330 and the electromagnetic induction heating layer 310). Taking FIG. 1 as an example, the lower bonding film 330 is disposed on the uppermost layer of the sealing laminated layer 300 and is used for lamination with the upper layer 100. More specifically, the lower bonding film 330 is laminated with the surface film 110 of the upper layer 100 through the bonding adhesive 210. In some embodiments, the material of the lower bonding film 330 may be at least one selected from the group consisting of PE, PP, PET, PA, EPP, and EPE, and the thickness of the lower bonding film 330 is preferably 12 µm to 200 µm. Therefore, the peel strength after the bonding film 330 and the upper layer 100 are laminated can be improved.

Therefore, the easy-open type closure liner 50 shown in FIG. 1 can not only prevent the contents from leaking and deteriorating due to the influence of the external environment, but also enable the user to directly pinch the half-moon type pull valve (the structure of the upper layer 100 of the part above the un-bonded area UA) by hand to easily peel off the easy-open type closure liner 50 from the container opening without the help of external objects, and thus the effect of convenient opening is further achieved. That is, the easy-open type closure liner 50 shown in FIG. 1 can achieve both the sealing performance for preserving the contents and the convenience for the user to open.

In some embodiments, the section width W1 of a coating range of the bonding adhesive 210 may be greater than or equal to one-sixth of the section width W2 of the easy-open type closure liner 50, and the section width W1 of the coating range of the bonding adhesive 210 may be smaller than or equal to five-sixths of the section width W2 of the easy-open type closure liner 50, so that a manufacturer can adjust the coating range of the bonding adhesive 210 according to actual needs, and then the design flexibility of the manufacturer is further improved. In addition, when the section width W2 of the easy-open type closure liner 50 is large, the section width W1 of the coating range of the bonding adhesive 210 may be small; and when the section width W2 of the easy-open type closure liner 50 is small, the section width W1 of the coating range of the bonding adhesive 210 may be large.

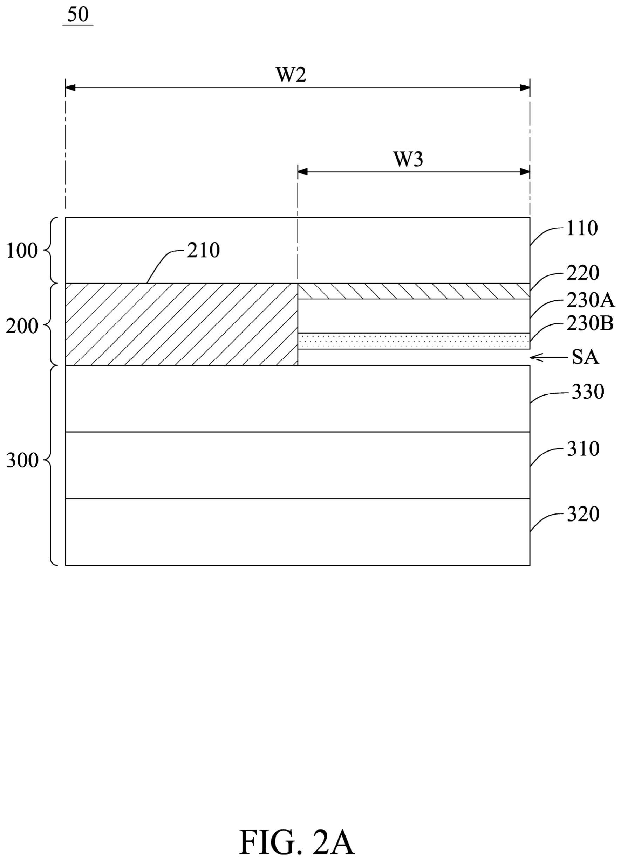

Please refer to FIG. 2A, FIG. 2A is a schematic cross-sectional diagram of an easy-open type closure liner 50 according to Embodiment 2 of the present application. More specifically, the easy-open type closure liner 50 shown in FIG. 2A may further include an interlayer 230A and a coating layer 230B, and the interlayer 230A may be laminated with the upper layer 100 through a lamination adhesive 220. Each structure will be described in more detail below. Since other elements are substantially the same as those of the easy-open type closure liner 50 shown in FIG. 1, the details are omitted here.

### <<Interlayer 230A>>

Taking FIG. 2A as an example, the interlayer 230A may be disposed in the un-bonded area UA shown in FIG. 1, and the interlayer 230A may be laminated with the upper layer 100 through the lamination adhesive 220. In some embodiments, the material of the interlayer 230A may be at least one selected from the group consisting of PET, PP, PA, PEN, and PI, and the thickness of the interlayer 230A is preferably 12 µm to 24 µm. In some embodiments, the easy-open type closure liner 50 may allow the peel strength between the interlayer 230A and the upper layer 100 to be greater than or equal to 17.8 N/15 mm through the lamination adhesive 220, thereby stably laminating the interlayer 230A with the upper layer 100. In some embodiments, the lamination adhesive 220 may be a jointing adhesive that allows the peel strength between the interlayer 230A and the upper layer 100 to be greater than or equal to 17.8 N/15 mm, but is not limited thereto. In some embodiments, the lamination adhesive 220 may be a dry compound adhesive, but is not limited thereto. In some other embodiments, the lamination adhesive 220 may be a hot melt lamination glue, and the material of the hot melt lamination glue may be at least one selected from the group consisting of PE, PP, EMAC, EMAA, EAA, EEA, and EMMA. Moreover, the thickness of the hot melt lamination glue is preferably 4 µm to 60 µm. In some embodiments, in order to improve the convenience of manufacturing, the lamination adhesive 220 may be the same as the bonding adhesive 210, and the easy-open type closure liner 50 can allow the peel strength between the surface film 110 and the sealing laminated layer 300 to be greater than or equal to 17.8 N/15 mm through the bonding adhesive 210. That is, the same adhesive (such as the jointing adhesive, the dry compound adhesive, or the hot melt lamination glue) is used as the bonding adhesive 210 and the lamination adhesive 220. In other words, the bonding adhesive 210 and the lamination adhesive 220 may be treated as the same adhesive and coated at the same time.

### <<Coating layer 230B>>

Taking FIG. 2A as an example, the coating layer 230B may be coated on a lower surface of the interlayer 230A. In some embodiments, the material of the coating layer 230B may be gloss oil or silicone oil, and the thickness of the coating layer 230B is preferably 0.5 µm to 20 µm. Because the lower surface of the interlayer 230A is only coated with the coating layer 230B, and the interlayer 230A is not laminated with the sealing laminated layer 300 through other adhesives, a spacing area SA may be formed between the coating layer 230B and the sealing laminated layer 300, thus some areas between the coating layer 230B and the sealing laminated layer 300 are separated from each other (i.e., in a state of not being completely laminated with each other). Then, the user can directly easily peel off the easy-open type closure liner 50 by hand without the help of external objects.

In addition, for the conventional closure liner, when the spacing between the electromagnetic induction heating layer 310 and the interlayer 230A is thinned, and after electromagnetic induction sealing is performed, a pull valve of the conventional closure liner is often adhered to the film below, and consequently, the user cannot easily open the pull valve. According to the easy-open type closure liner 50 shown in FIG. 2A, because the lower surface of the interlayer 230A is coated with the gloss oil or the silicone oil (i.e., the coating layer 230B), the user can easily strip the interlayer 230A with fingers, and therefore it is ensured that the user can directly pinch the interlayer 230A with hands to easily peel off the easy-open type closure liner 50 without the help of external objects.

In some embodiments, the coating mode of the coating layer 230B may be full coating or dot coating, so that the user can easily strip the interlayer 230A with fingers, thereby ensuring that the user can directly pinch the interlayer 230A with hands to easily peel off the easy-open type closure liner 50 without the help of external objects. By taking the dot coating mode as an example, after electromagnetic induction sealing is performed, a small amount of air between dot matrices of dot-coated gloss oil or silicone oil in the easy-open type closure liner 50 provided by the present application will be heated and expanded by the electromagnetic induction sealing, which pushes the interlayer 230A upward, thereby ensuring that the interlayer 230A and the sealing laminated layer 300 are separated from each other, so that the user can easily strip the interlayer 230A with fingers, and then the user can directly pinch the interlayer 230A by hand to easily peel off the easy-open type closure liner 50 without the help of external objects.

In some embodiments, the section width W3 of a coating range of the coating layer 230B may be greater than or equal to one-sixth of the section width W2 of the easy-open type closure liner 50, and the section width W3 of the coating range of the coating layer 230B may be smaller than or equal to five-sixths of the section width W2 of the easy-open type closure liner 50, so that a manufacturer can adjust the coating range of the coating layer 230B according to actual needs, and then the design flexibility of the manufacturer is further improved.

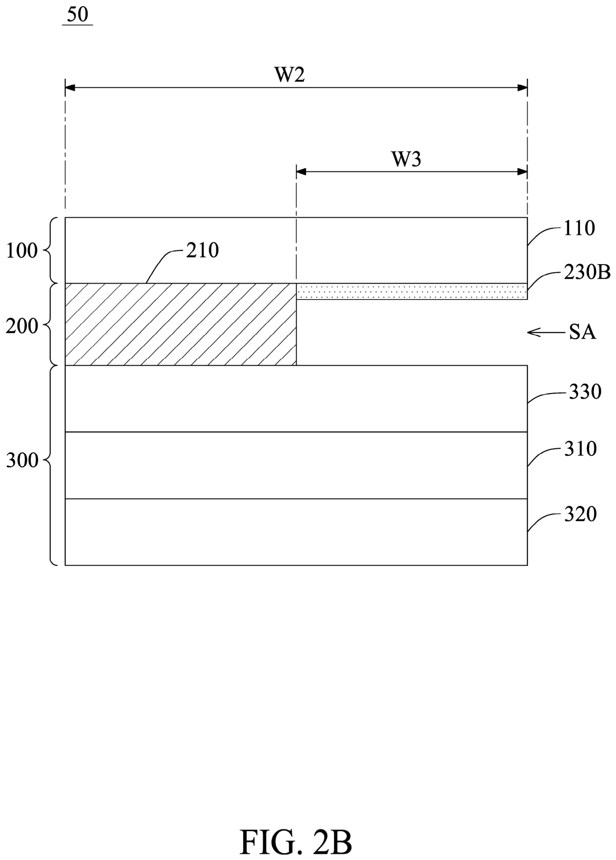

Please refer to FIG. 2B, FIG. 2B is a schematic cross-sectional diagram of an easy-open type closure liner 50 according to Embodiment 3 of the present application. More specifically, the easy-open type closure liner 50 shown in FIG. 2B may further include the coating layer 230B. Since other elements are substantially the same as those of the easy-open type closure liner 50 shown in FIG. 1, the details are omitted here.

### <<Coating layer 230B>>

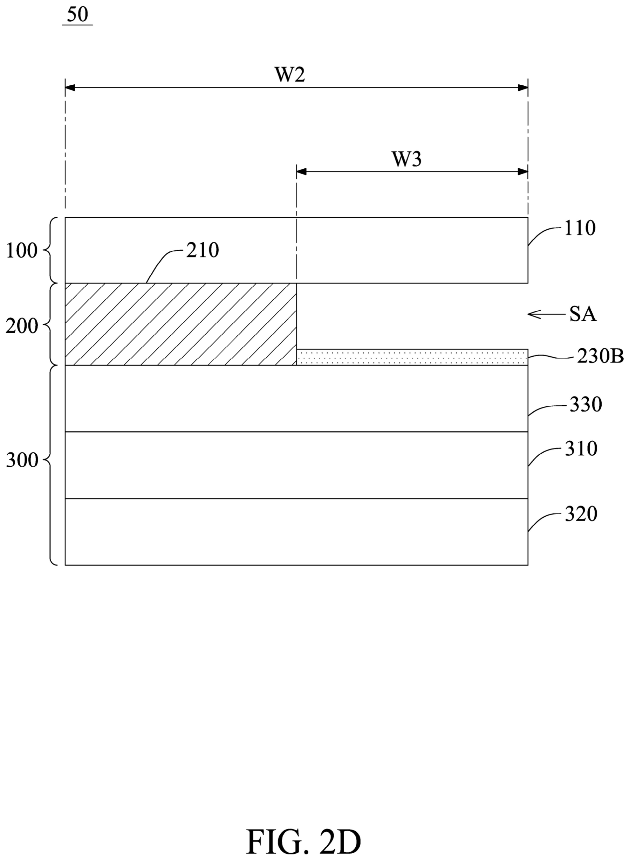

The coating layer 230B may be coated on a lower surface of the upper layer 100 (shown in FIG. 2B) or an upper surface of the sealing laminated layer 300 (shown in FIG. 2D later). Taking FIG. 2B as an example, the coating layer 230B may be coated on the lower surface of the upper layer 100. More specifically, the coating layer 230B may be coated on the lower surface of the surface film 110 of the upper layer 100; and moreover, the coating layer 230B may be coated on an upper surface of the lower bonding film 330 of the sealing laminated layer 300 shown in FIG. 2D. In some embodiments, the material of the coating layer 230B may be gloss oil or silicone oil, and the thickness of the coating layer 230B is preferably 0.5 µm to 20 µm. Because some areas on the lower surface of the upper layer 100 are coated with the coating layer 230B, and some areas of the upper layer 100 are not laminated with the sealing laminated layer 300 through other adhesives, the spacing area SA may be formed between the coating layer 230B and the sealing laminated layer 300, thus some areas between the coating layer 230B and the sealing laminated layer 300 are separated from each other (i.e., in a state of not being completely laminated with each other). Then, the user can directly easily peel off the easy-open type closure liner 50 by hand without the help of external objects. In other words, compared with FIG. 2A, the coating layer 230B in FIG. 2B is coated on the lower surface of the upper layer 100, rather than being coated on the lower surface of the interlayer 230A shown in FIG. 2A, thus elements of the easy-open type closure liner 50 can be decreased, then the overall thickness of the easy-open type closure liner 50 can be reduced, and the used lamination adhesive 220 shown in FIG. 2A can be decreased.

In addition, the coating mode of the coating layer 230B shown in FIG. 2B may be full coating or dot coating. Moreover, the section width W3 of the coating range of the coating layer 230B shown in FIG. 2B may be greater than or equal to one-sixth of the section width W2 of the easy-open type closure liner 50, and the section width W3 of the coating range of the coating layer 230B may be smaller than or equal to five-sixths of the section width W2 of the easy-open type closure liner 50.

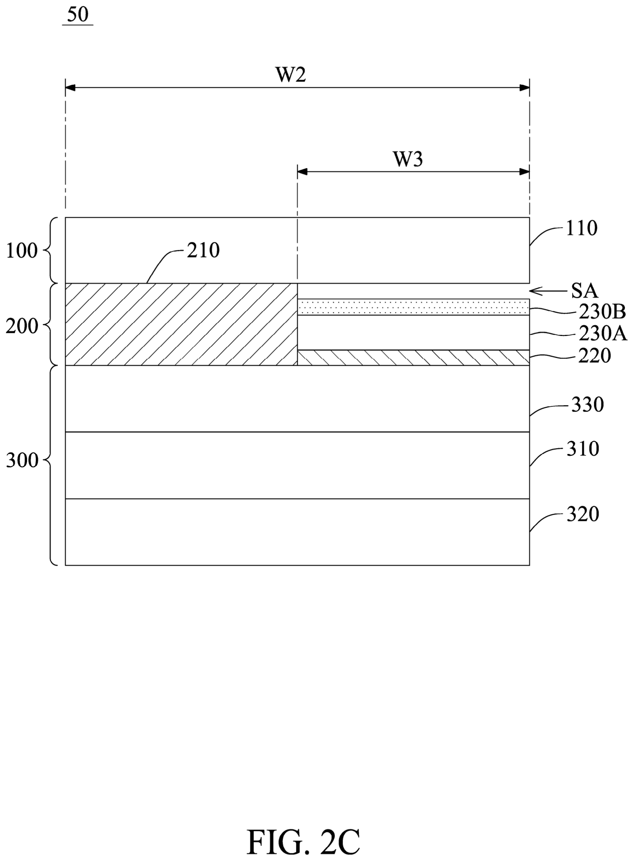

Please refer to FIG. 2C, FIG. 2C is a schematic cross-sectional diagram of local change of an easy-open type closure liner 50 shown in FIG. 2A. Compared with FIG. 2A, the configuration relationship among the lamination adhesive 220, the interlayer 230A, and the coating layer 230B of the easy-open type closure liner 50 shown in FIG. 2C can be properly adjusted. More specifically, the interlayer 230A of the easy-open type closure liner 50 shown in FIG. 2C may be disposed in the un-bonded area UA shown in FIG. 1 and may be laminated with the sealing laminated layer 300 through the lamination adhesive 220, thus the peel strength between the interlayer 230A and the sealing laminated layer 300 is greater than or equal to 17.8 N/15 mm (thus the interlayer 230A and the sealing laminated layer 300 can be stably laminated). The coating layer 230B may be coated on an upper surface of the interlayer 230A, then the spacing area SA is formed between the coating layer 230B and the upper layer 100, thus some areas between the coating layer 230B and the upper layer 100 are separated from each other (i.e., in a state of not being completely laminated with each other). Then, the user can directly easily peel off the easy-open type closure liner 50 by hand without the help of external objects.

Please refer to FIG. 2D, FIG. 2D is a schematic cross-sectional diagram of local change of an easy-open type closure liner 50 shown in FIG. 2B. More specifically, compared with FIG. 2B, the coating layer 230B of the easy-open type closure liner 50 shown in FIG. 2D is coated on an upper surface of the sealing laminated layer 300. Since other elements are substantially the same as those of the easy-open type closure liner 50 shown in FIG. 2B, the details are omitted here.

Taking FIG. 2A to FIG. 2D as examples, the coating layer 230B may be coated on the lower surface of the interlayer 230A shown in FIG. 2A, the coating layer 230B may be coated on the lower surface of the upper layer 100 shown in FIG. 2B, the coating layer 230B may be coated on the upper surface of the interlayer 230A shown in FIG. 2C, or the coating layer 230B may be coated on the upper surface of the sealing laminated layer 300 shown in FIG. 2D.

Please refer to FIG. 3, FIG. 3 is a schematic cross-sectional diagram of an easy-open type closure liner 50 according to Embodiment 4 of the present application. More specifically, the sealing laminated layer 300 of the easy-open type closure liner 50 shown in FIG. 3 further includes the laminated film 340. Since other elements are substantially the same as those of the easy-open type closure liner 50 shown in FIG. 1, the details are omitted here.

### <<Laminated film 340>>

Taking FIG. 3 as an example, the laminated film 340 is disposed above the electromagnetic induction heating layer 310, and more specifically, the laminated film 340 is disposed between the lower bonding film 330 and the electromagnetic induction heating layer 310, thereby improving the tensile strength of the easy-open type closure liner 50. In some embodiments, the material of the laminated film 340 may be at least one selected from the group consisting of PET, PP, PA, PEN, and PE, and the thickness of the laminated film 340 is preferably 12 µm to 100 µm.

Taking FIG. 3 as an example, the lower bonding film 330 and the laminated film 340, as well as the electromagnetic induction heating layer 310 and the laminated film 340 may be laminated through an adhesive 390. In some embodiments, the adhesive 390 may be a laminating adhesive that allows the peel strength between two laminated layers (for example, the lower bonding film 330 and the electromagnetic induction heating layer 310, or the electromagnetic induction heating layer 310 and the laminated film 340) to be greater than or equal to 4 N/15 mm, but is not limited thereto.

Please refer to FIG. 4A, FIG. 4A is a schematic cross-sectional diagram of an easy-open type closure liner 50 according to Embodiment 5 of the present application. More specifically, the upper layer 100 of the easy-open type closure liner 50 shown in FIG. 4A further includes an upper bonding film 130, and the sealing laminated layer 300 further includes a thickening layer 360. Since other elements are substantially the same as those of the easy-open type closure liner 50 shown in FIG. 2A, the details are omitted here.

### <<Upper bonding film 130>>

The upper bonding film 130 is disposed below the surface film 110. In other words, the upper bonding film 130 may be directly laminated below the surface film 110, and the upper bonding film 130 may also be indirectly laminated below the surface film 110 (that is, other structures are disposed between the surface film 110 and the upper bonding film 130). Taking FIG. 4A as an example, the upper bonding film 130 is disposed on the lowermost layer of the upper layer 100 and is laminated with the sealing laminated layer 300. More specifically, the upper bonding film 130 is laminated with the lower bonding film 330 of the sealing laminated layer 300 through the bonding adhesive 210. In some embodiments, the material of the upper bonding film 130 may be at least one selected from the group consisting of PE, PP, PA, EMMA, and EMAC, and the thickness of the upper bonding film 130 is preferably 12 µm to 100 µm. Therefore, the peel strength after the upper bonding film 130 and the lower bonding film 330 of the sealing laminated layer 300 are laminated can be improved.

### <<Lower bonding film 330>>

Taking FIG. 4A as an example, the lower bonding film 330 is disposed on the uppermost layer of the sealing laminated layer 300 and is laminated with the upper layer 100. More specifically, the lower bonding film 330 is laminated with the upper bonding film 130 of the upper layer 100 through the bonding adhesive 210. In some embodiments, the material of the lower bonding film 330 may be at least one selected from the group consisting of PE, PP, PET, PA, EPP, and EPE, and the thickness of the lower bonding film 330 is preferably 12 µm to 200 µm. Therefore, the peel strength after the lower bonding film 330 and the upper bonding film 130 of the upper layer 100 are laminated can be improved.

### <<Thickening layer 360>>

Taking FIG. 4A as an example, the thickening layer 360 is disposed above the electromagnetic induction heating layer 310 (specifically disposed between the lower bonding film 330 and the electromagnetic induction heating layer 310), and is used for increasing the thickness of the easy-open type closure liner 50. In some embodiments, the material of the thickening layer 360 may be at least one selected from the group consisting of EPE, EPP, PE, PP, and paper, and the thickness of the thickening layer 360 is preferably 60 µm to 2000 µm. Therefore, the thickness of the easy-open type closure liner 50 can be increased.

Taking FIG. 4A as an example, the lower bonding film 330 and the thickening layer 360, as well as the thickening layer 360 and the electromagnetic induction heating layer 310 may be laminated through the adhesive 390. In some embodiments, the adhesive 390 may be a laminating adhesive that allows the peel strength between two laminated layers (for example, the lower bonding film 330 and the thickening layer 360, or the thickening layer 360 and the electromagnetic induction heating layer 310) to be greater than or equal to 4 N/15 mm, but is not limited thereto.

Moreover, the surface film 110 and the upper bonding film 130 may be laminated through an adhesive 190. In some embodiments, the adhesive 190 may be a laminating adhesive that allows the peel strength between two laminated layers (for example, the surface film 110 and the upper bonding film 130) to be greater than or equal to 4 N/15 mm, but is not limited thereto.

Please refer to FIG. 4B, FIG. 4B is a schematic cross-sectional diagram of local change of an easy-open type closure liner 50 shown in FIG. 4A. More specifically, compared with FIG. 4A, the configuration relationship among the lamination adhesive 220, the interlayer 230A, and the coating layer 230B of the easy-open type closure liner 50 shown in FIG. 4B are substantially the same as those of the easy-open type closure liner 50 shown in FIG. 2C, the spacing area SA is formed between the coating layer 230B and the upper layer 100, thus some areas between the coating layer 230B and the upper layer 100 are separated from each other (i.e., in a state of not being completely laminated with each other). Then, the user can directly easily peel off the easy-open type closure liner 50 by hand without the help of external objects.

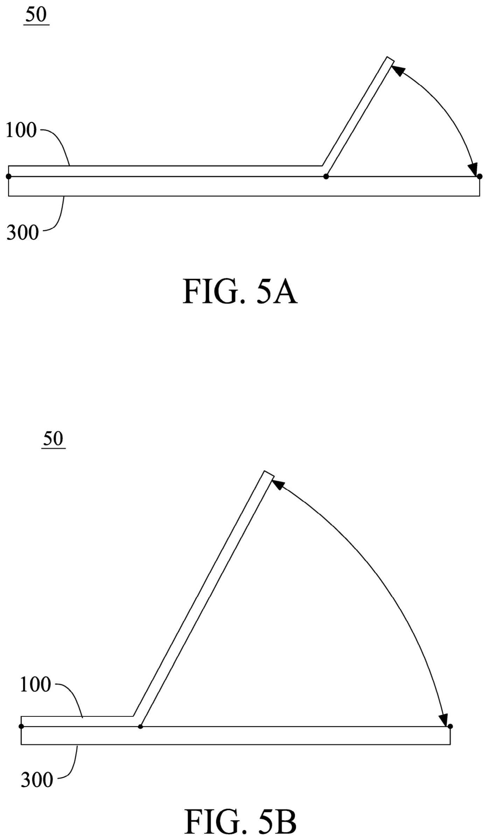

Please refer to FIG. 5A to FIG. 5B, FIG. 5A to FIG. 5B are side views of an easy-open type closure liner 50 according to Specific Example 1 of the present application. More specifically, FIG. 5A shows an implementation that the section width of a coating range of the bonding adhesive for laminating the upper layer 100 with the sealing laminated layer 300 is equal to one-sixth of the section width of the easy-open type closure liner 50. FIG. 5B shows an implementation that the section width of the coating range of the bonding adhesive for laminating the upper layer 100 with the sealing laminated layer 300 is equal to five-sixths of the section width of the easy-open type closure liner 50.

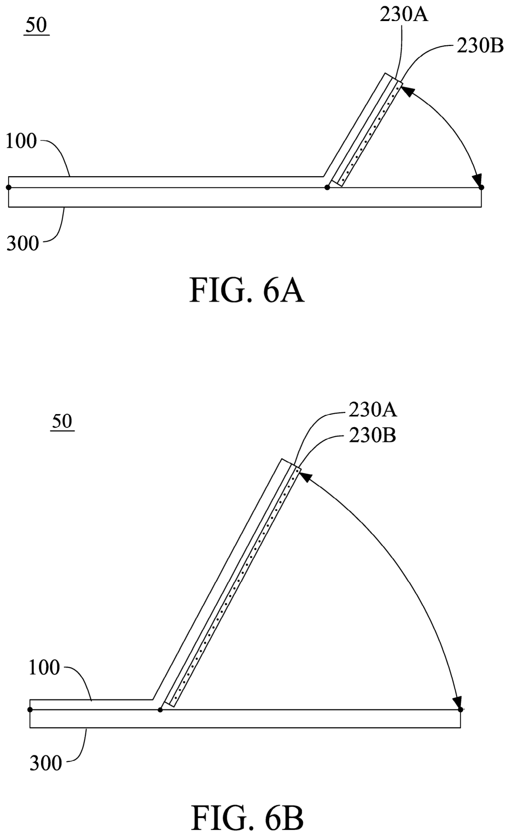

Please refer to FIG. 6A to FIG. 6B, FIG. 6A to FIG. 6B are side views of an easy-open type closure liner 50 according to Specific Example 2 of the present application. More specifically, FIG. 6A shows an implementation that the section width of the coating range of the coating layer 230B coated below the interlayer 230A is equal to one-sixth of the section width of the easy-open type closure liner 50. FIG. 6B shows an implementation that the section width of the coating range of the coating layer 230B coated below the interlayer 230A is equal to five-sixths of the section width of the easy-open type closure liner 50.

### [Wireless information integrated flake]

Then, the wireless information integrated flake according to the present application is described.

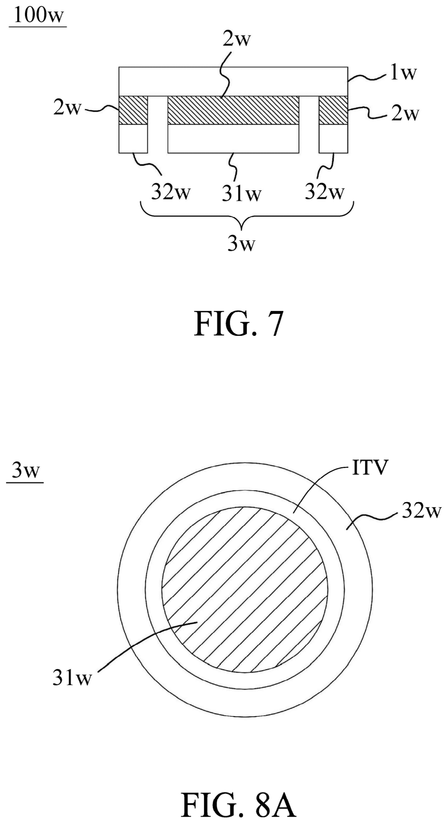

First, please referring to FIG. 7, FIG. 7 is a schematic cross-sectional diagram of a wireless information integrated flake 100w according to Embodiment 1 of the present application. As shown in FIG. 7, the wireless information integrated flake 100w may include a base film 1w, a first adhesive layer 2w, and an information and heating layer 3w. The first adhesive layer 2w is located between the base film 1w and the information and heating layer 3w so as to bond the base film 1w to the information and heating layer 3w. Each structure will be described in more detail below.

The base film 1w is used for manufacturing an initial layer of the wireless information integrated flake. In a specific example, the material of the base film 1w may be at least one selected from the group consisting of PI, PEN, PET, Polycarbonate (PC), PP, and PE. Moreover, the thickness of the base film 1w is preferably 20 µm to 150 µm, and within this range, the longitudinal tensile strength is large. In addition, as shown in FIG. 7, the lower surface of the base film 1w is bonded to the first adhesive layer 2w, and the upper surface of the base film 1w can serve as a printing surface for printing different patterns.

The first adhesive layer 2w is a layer used for bonding the base film to the information and heating layer. In a specific example, the first adhesive layer 2w only needs to be able to bond the base film 1w to the information and heating layer 3w, and the material of the first adhesive layer may be, for example, a laminating adhesive. Moreover, the thickness of the first adhesive layer 2w may be 0.5 µm to 7 µm, and the peel strength between two layers of bonded materials may be greater than 4 N/15 mm.

Taking FIG. 7 as an example, the information and heating layer 3w includes an information area 31w and an electromagnetic induction heating ring 32w. The information area 31w has a wireless information reading, writing and transmitting function so that follow-up product tracing can be facilitated. The information area 31w is provided with an antenna 312w and a chip 311w which are electrically interconnected. Moreover, the electromagnetic induction heating rings 32w can perform heating through electromagnetic induction of an electromagnetic field generated by an electromagnetic induction sealing machine, then the sealing layer of the closure liner is heated and melted to be adhered to the container opening, thus serving as an electromagnet induction closure liner for sealing the container opening. By incorporating the wireless information integrated flake according to the present application, most of the heat generation can occur at the electromagnetic induction heating ring 32w, with only minimal heat being conducted through at least one physical connecting bridge 33w between the antenna 312w and the electromagnetic induction heating ring 32w. The length of the physical connecting bridge 33w may be 0.1 mm to 3 mm, the width of the physical connecting bridge 33w may be 0.01 mm to 5 mm, and the material of the physical connecting bridge 33w may be the same as that of the antenna 312w. Therefore, a large amount of heat generated during electromagnetic induction sealing can be prevented from being transmitted to a center area of the closure liner, and energy waste can be reduced. Moreover, when applying to a closure liner containing a battery, the thickness of the information and heating layer 3w may be 6 µm to 2.5 mm. When applying to a closure liner which contains no battery, the thickness of the information and heating layer 3w may be 6 µm to 300 µm.

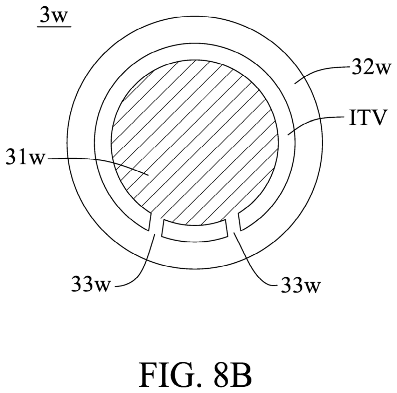

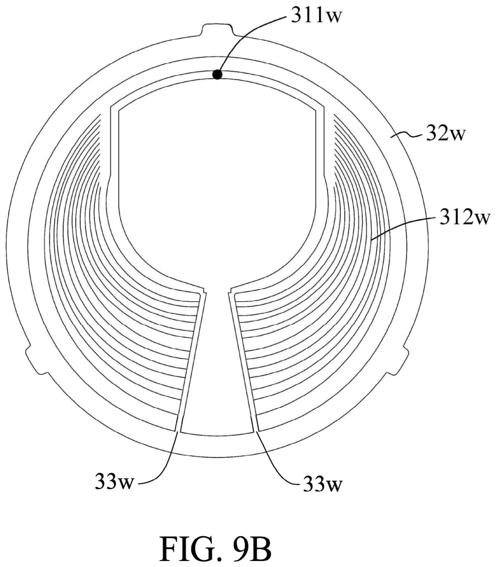

Then, FIG. 8A is a schematic plan diagram of a specific example of the information and heating layer 3w according to the present application and FIG. 8B is a schematic plan diagram of another specific example of the information and heating layer 3w according to the present application. As shown in FIG. 8A or FIG. 8B, the electromagnetic induction heating ring 32w surrounds the information area 31w in a plane view angle. Moreover, as shown in FIG. 8A, a spacing ITV fully occupies the position between the electromagnetic induction heating ring 32w and the information area 31w. That is, no physical connection element (e.g., a physical connecting bridge as described later) is disposed between the electromagnetic induction heating ring 32w and the information area 31w. Thus, because the spacing ITV fully occupies the position between the electromagnetic induction heating ring 32w and the information area 31w. Such spacing ITV can block heat from being conducted to the information area 31w when electromagnetic induction heating occurs, making it preferable. Moreover, the spacing ITV (a space between the outermost edge of the information area 31w and the innermost edge of the electromagnetic induction heating ring 32w) may be 0.1 mm to 3 mm. Then, as shown in FIG. 8B, a spacing ITV occupies most of the position between the electromagnetic induction heating ring 32w and the information area 31w. The spacing ITV can block a majority of heat from being conducted to the information area 31w when electromagnetic induction heating occurs, and the spacing ITV (the space between the outermost edge of the information area 31w and the innermost edge of the electromagnetic induction heating ring 32w) may be 0.1 mm to 3 mm. In addition, there may be at least one physical connecting bridge 33w (two are shown in FIG. 8B and FIG. 9B as described later) disposed between the antenna 312w and the electromagnetic induction heating ring 32w, the length of the physical connecting bridge 33w may be 0.1 mm to 3 mm, and the width of the physical connecting bridge 33w may be 0.01 mm to 5 mm. At this moment, although the electromagnetic induction heating ring 32w of a closed loop structure is electrically connected to the information area 31w, the distance of wireless communication is not reduced too much. That is, the spacing ITV may fully occupy the position between the electromagnetic induction heating ring 32w and the information area 31w, the spacing ITV and the physical connecting bridge 33w may be disposed simultaneously, or there may be no spacing (e.g., the physical connecting bridge 33w fully occupies the position between the electromagnetic induction heating ring 32w and the information area 31w).

In a specific example, the material of the electromagnetic induction heating ring 32w may be metal such as aluminum, copper, gold, silver or tin, but is not limited thereto. Moreover, from the perspectives of the effect of generating heat under a changing electromagnetic field and cost, the electromagnetic induction heating ring 32w is preferably aluminum foil, and the thickness of it is preferably 6 µm to 40 µm.

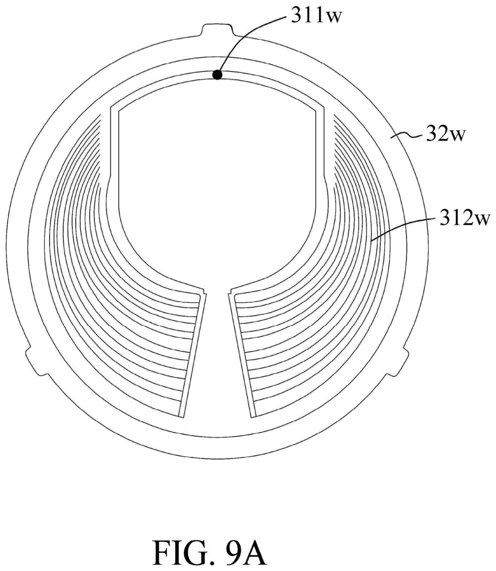

Then, FIG. 9A is a schematic plan diagram of a specific example of the information area according to the present application and FIG. 9B is a schematic plan diagram of another specific example of the information area according to the present application. FIG. 9A shows a corresponding implementation in which the spacing ITV fully occupies the position between the electromagnetic induction heating ring 32w and the information area 31w in FIG. 8A. FIG. 9B shows a corresponding implementation in which the spacing ITV occupies most of the position between the electromagnetic induction heating ring 32w and the information area 31w in FIG. 8B. In addition, as shown in FIG. 9A or FIG. 9B, the information area 31w includes a chip 311w and an antenna 312w. Moreover, when the wireless information transmission function can be achieved, the chip 311w and the antenna 312w may be arranged in a mode of FIG. 9A or FIG. 9B or other modes based on a radio frequency identification (RFID) frequency band to be used by the user, and which is not specially limited.

On the other hand, the chip 311w may have a unique identification code, may be selected according to purposes, and may be, for example, a radio frequency identification near field communication (RFID_NFC) chip, a radio frequency identification high frequency (RFID_HF) chip, a radio frequency identification ultrahigh frequency (RFID_UHF) chip or a radio frequency identification microwave (RFID_MW) chip, and the like, which is not specially limited. The chips can all be matched with the following antenna 312w to achieve the wireless information communication function.

Then, the antenna 312w is mainly used for generating a signal for wireless transmission, and the material thereof may be metals such as copper, silver, gold, tin, or aluminum, which is not specially limited.

In addition, although the base film 1w is disposed above and the information and heating layer 3w is disposed below in FIG. 7, the sequence of the base film 1w and the information and heating layer 3w may be reversed according to needs. That is, the base film 1w is disposed below and the information and heating layer 3w is disposed above.

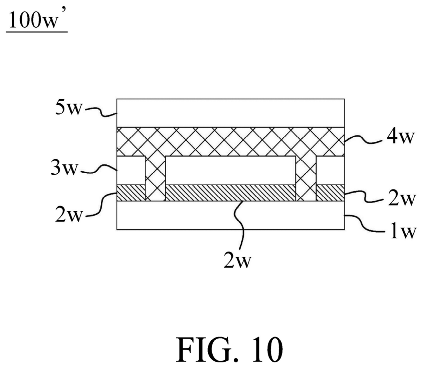

In addition, the wireless information integrated flake may also be a wireless information integrated flake 100w', which includes a protective layer 5w and a second adhesive layer 4w in addition to the base film 1w, the first adhesive layer 2w and the information and heating layer 3w, as shown in FIG. 10. The protective layer 5w is located on one side, away from the base film 1w, of the information and heating layer 3w. Moreover, the second adhesive layer 4w is located between the information and heating layer 3w and the protective layer 5w, and is a layer for bonding the information and heating layer 3w to the protective layer 5w.

In a specific example, the second adhesive layer 4w only needs to be able to bond the information and heating layer 3w to the protective layer 5w, and the material of the second adhesive layer 4w may be a dry compound adhesive, which is not specifically limited. Moreover, the thickness of the second adhesive layer 4w may be 0.5 µm to 7 µm, and preferably, the peel strength between two layers of bonded materials is greater than 4 N/15 mm. In addition, as shown in FIG. 10, the second adhesive layer 4w may extend to fill the spacing between the electromagnetic induction heating ring 32w and the information area 31w so as to improve the overall structural strength of the wireless information integrated flake 100w'.

Then, the protective layer 5w is described. The protective layer 5w is used for protecting the information area 31w (namely the chip 311w, the antenna 312w, and an additionally added battery) from damaging the chip 311w and the battery by external force to influence the wireless information transmission capability. The material of the protective layer 5w may be at least one selected from the group consisting of Polyethylene Terephthalate (PET), Polypropylene (PP), Polyethylene (PE), Polyamide (PA), Polyvinylidene Chloride (PVDC), Ethylene Vinyl Alcohol Copolymer (EVOH), Polyethylene Naphthalate (PEN), and Polyimide (PI). Moreover, in a preferable specific example, the thickness of the protective layer 5w may be 12 µm to 100 µm.

In addition, the upper surface or the lower surface of the protective layer 5w may be used as the printing surface. Therefore, although FIG. 10 shows that the base film 1 is disposed below and the protective layer 5w is disposed above (an upper surface of the protective layer 5w is used as the printing surface), the sequence of the base film 1w and the protective layer 5w may be reversed as required. That is, the base film 1w is disposed above and the protective layer 5w is disposed below (a lower surface of the protective layer 5w is used as the printing surface).

### [manufacturing method for the easy-open type closure liner (I)]

The method for manufacturing the easy-open type closure liner 50 shown in FIG. 3 will be further described here.

First, a lower surface of a laminated film roll stock is coated with the adhesive, and the lower surface of the laminated film roll stock and an upper surface of an electromagnetic induction heating layer roll stock are subjected to dry lamination, and then placed in a curing chamber for more than 24 hours, so as to obtain a first laminated part roll stock.

Then, a laminated film surface of the first laminated part roll stock is coated with the adhesive, and the laminated film surface of the first laminated part roll stock and a lower surface of a lower bonding film roll stock are subjected to dry lamination, and then placed in the curing chamber for more than 24 hours, so as to obtain a second laminated part roll stock.

Then, an electromagnetic induction heating layer surface of the second laminated part roll stock is coated with the adhesive, and the electromagnetic induction heating layer surface of the second laminated part roll stock and an upper surface of a sealing film roll stock are subjected to dry lamination, and then placed in the curing chamber for more than 24 hours, so as to obtain a lower laminated part roll stock. Alternatively, the electromagnetic induction heating layer surface of the second laminated part roll stock is coated with the hot melt glue, so as to obtain a lower laminated part roll stock.

Then, a specified range on a lower surface of a surface film roll stock is coated with the bonding adhesive, and the lower surface of the surface film roll stock and a lower bonding film surface of the lower laminated part roll stock are subjected to dry lamination, and then placed in the curing chamber for more than 24 hours, so as to obtain an easy-open type closure liner roll stock. Afterwards, the easy-open type closure liner in a proper size is cut according to the requirements of the user.

Here, the specified range is between one-sixth and five-sixths of the section width of the easy-open type closure liner. In addition, the peel strength between two layers of materials laminated by the adhesive is greater than 4 N/15 mm. The peel strength between two layers of materials laminated by the bonding adhesives is greater than or equal to 17.8 N/15 mm. The temperatures of 5 sections of a heating tunnel above a dry compound machine are 60°C to 65°C, 65°C to 70°C, 70°C to 75°C, 75°C to 80°C and 80°C to 85°C, respectively. The temperature of a laminating press roller of the dry compound machine is 50°C to 60°C. The temperature of the curing chamber is 50°C to 55°C.

### [manufacturing method for the easy-open type closure liner (II)]

The method for manufacturing the easy-open type closure liner 50 shown in FIG. 4A will be further described here.

First, a lower surface of a surface film roll stock is coated with the adhesive, and the lower surface of the surface film roll stock and an upper surface of an upper bonding film roll stock are subjected to dry lamination, and then placed in a curing chamber for more than 24 hours, so as to obtain an upper laminated part roll stock.

Then, a lower surface of an interlayer roll stock is coated with gloss oil or silicone oil in a full coating or dot coating manner, so as to obtain a coated pull-valve film roll stock.

Then, an upper surface of the electromagnetic induction heating layer roll stock is coated with the adhesive, and the upper surface of the electromagnetic induction heating layer roll stock and a lower surface of a thickening layer roll stock are subjected to dry lamination, and then placed in the curing chamber for more than 24 hours, so as to obtain a first laminated part roll stock.

Then, a thickening layer surface of the first laminated part roll stock is coated with the adhesive, and the thickening layer surface of the first laminated part roll stock and a lower surface of a lower bonding film roll stock are subjected to dry lamination, and then placed in the curing chamber for more than 24 hours, so as to obtain a second laminated part roll stock.

Then, an electromagnetic induction heating layer surface of the second laminated part roll stock is coated with the adhesive, and the electromagnetic induction heating layer surface of the second laminated part roll stock and an upper surface of a sealing film roll stock are subjected to dry lamination, and then placed in the curing chamber for more than 24 hours, so as to obtain a lower laminated part roll stock. Alternatively, the electromagnetic induction heating layer surface of the second laminated part roll stock is coated with the hot melt glue, so as to obtain a lower laminated part roll stock.

Then, an upper bonding film surface of the upper laminated part roll stock is coated with a super adhesive, and the coated pull-valve film roll stock is sandwiched therebetween; and an upper bonding film surface of the upper laminated part roll stock, an upper surface of the coated pull-valve film roll stock and a lower bonding film surface of the lower laminated part roll stock are subjected to dry lamination by a sandwich lamination method, and then placed in the curing chamber for more than 24 hours, so as to obtain the easy-open type closure liner roll stock. Afterwards, the easy-open type closure liner in a proper size is cut according to the requirements of the user.

Here, the section width of the coated pull-valve film roll stock is between one-sixth and five-sixths of the section width of the easy-open type closure liner. The peel strength between two layers of materials laminated by the adhesive is greater than 4 N/15 mm. The peel strength between two layers of materials laminated by the super adhesive (i.e., the same adhesive is used as the bonding adhesive and lamination adhesive according to the present application) is greater than or equal to 17.8 N/15 mm. The temperatures of 5 sections of a heating tunnel above a dry compound machine are 60°C to 65°C, 65°C to 70°C, 70°C to 75°C, 75°C to 80°C and 80°C to 85°C, respectively. The temperature of a laminating press roller of the dry compound machine is 50°C to 60°C. The temperature of the curing chamber is 50°C to 55°C.

### [Manufacturing of wireless information integrated flake roll stock]

The wireless information integrated flake roll stock in a preferred example of the present application is manufactured based on the following steps, and the wireless information integrated flake roll stock may be used in the manufacturing process of the easy-open type closure liner roll stock as one implementation of the electromagnetic induction heating layer roll stock.

First, a laminating surface of the base film roll stock is coated with the laminating adhesive (first adhesive layer), and after it is laminated with a laminating surface of a metal foil roll stock, a wireless information integrated flake blank roll stock is made. Second, etching processing is carried out on metal foil of the wireless information integrated flake blank roll stock, the antenna and the chip are bonded electrically, and then the chip and a connecting wire for connecting the chip to the antenna are packaged through a dispenser using a chip packaging protective adhesive. At this moment, the metal foil of the wireless information integrated flake blank roll stock forms the information and heating layer, and the wireless information integrated flake blank roll stock is the wireless information integrated flake roll stock.

The peel strength between two layers of materials laminated through the laminating adhesive is greater than 4 N/15 mm.

In addition, if it is desired to add a battery to the information and heating layer, a battery cell and the chip can be processed to be electrically connected through a fusion welding machine or a conductive adhesive.

On the other hand, based on the wireless information integrated flake roll stock, a laminating surface of a protective layer roll stock is coated with the dry compound adhesive (a second adhesive layer), and after it is subjected to dry lamination with the surface (the surface away from the base film) of the information and heating layer of the wireless information integrated flake roll stock, the laminated material is placed in the curing chamber for curing for more than 24 hours, so as to obtain a wireless information integrated flake roll stock related to another embodiment.

It is to be noted that the above description is only an illustrative example of the manufacturing of the easy-open type closure liner according to the present application. In other words, those with ordinary knowledge in the art of the present application can also adjust the sequence to manufacture the easy-open type closure liner according to the present application.

## Claims

1. An easy-open type closure liner (50), comprising, in a sequence from top to bottom:
an upper layer (100), comprising a surface film (110);
a bonding layer (200), comprising a bonding adhesive (210); and
a sealing laminated layer (300), comprising a lower bonding film (330), an electromagnetic induction heating layer (310) and a sealing layer (320) in a sequence from top to bottom,
wherein the bonding layer (200) laminates the upper layer (100) with the sealing laminated layer (300) through the bonding adhesive (210), and an un-bonded area (UA) is formed between the upper layer (100) and the sealing laminated layer (300),
wherein the electromagnetic induction heating layer (310) is a wireless information integrated flake (100w; 100w'), comprising:
a base film (1w);
an information and heating layer (3w), comprising an information area (31w) and an electromagnetic induction heating ring (32w); and
a first adhesive layer (2w), located between the base film (1w) and the information and heating layer (3w),
wherein the information area (31w) is provided with an antenna (312w) and a chip (311w) which are electrically interconnected, and the electromagnetic induction heating ring (32w) surrounds the information area (31w) in a plane view angle,
wherein a spacing (ITV) is formed between the electromagnetic induction heating ring (32w) and the information area (31w).

2. The easy-open type closure liner (50) according to claim 1, wherein the section width (W1) of a coating range of the bonding adhesive (210) is greater than or equal to one-sixth of the section width (W2) of the easy-open type closure liner (50), and the section width (W1) of the coating range of the bonding adhesive (210) is smaller than or equal to five-sixths of the section width (W2) of the easy-open type closure liner (50).

3. The easy-open type closure liner (50) according to claim 1, wherein the bonding layer (200) further comprises:
an interlayer (230A), disposed in the un-bonded area (UA) and laminated with the upper layer (100) through a lamination adhesive (220); and
a coating layer (230B), coated on a lower surface of the interlayer (230A),
wherein the material of the interlayer (230A) is at least one selected from the group consisting of Polyethylene Terephthalate (PET), Polypropylene (PP), Polyamide (PA), Polyethylene Naphthalate (PEN), and Polyimide (PI); and
wherein the material of the coating layer (230B) is gloss oil or silicone oil.

4. The easy-open type closure liner (50) according to claim 1, wherein the bonding layer (200) further comprises:
an interlayer (230A), disposed in the un-bonded area (UA) and laminated with the sealing laminated layer (300) through a lamination adhesive (220); and
a coating layer (230B), coated on an upper surface of the interlayer (230A),
wherein the material of interlayer (230A) is at least one selected from of the group consisting of PET, PP, PA, PEN and PI; and
wherein the material of the coating layer (230B) is gloss oil or silicone oil.

5. The easy-open type closure liner (50) according to claim 1, wherein the bonding layer (200) further comprises:
a coating layer (230B), coated on a lower surface of the upper layer (100) or an upper surface of the sealing laminated layer (300),
wherein the material of the coating layer (230B) is gloss oil or silicone oil.

6. The easy-open type closure liner (50) according to claim 1, wherein the material of the lower bonding film (330) is at least one selected from the group consisting of Polyethylene (PE), PP, PET, PA, Expandaple Polyproplene (EPP), and Expandable Polyethylene (EPE).

7. The easy-open type closure liner (50) according to claim 1, wherein the sealing laminated layer (300) further comprises:
a laminated film (340), disposed above the electromagnetic induction heating layer (310),
wherein the material of the laminated film (340) is at least one selected from of the group consisting of PET, PP, PA, PEN and PE.

8. The easy-open type closure liner (50) according to claim 1, wherein the bonding adhesive (210) is a dry compound adhesive or a hot melt lamination glue, and the material of the hot melt lamination glue is at least one selected from the group consisting of PE, PP, Ethylene-Methyl Acrylate Copolymer (EMAC), Ethylene Methacrylic Acid Copolymer (EMAA), Ethylene Acrylic Acid copolymer (EAA), Ethylene Ethyl Acrylate Copolymer (EEA), and Ethylene Methyl Methacrylate (EMMA).

9. The easy-open type closure liner (50) according to claim 1, wherein the material of the surface film (110) is at least one selected from of the group consisting of PP, PET, PE, PA, PEN, PI, and EMAC.

10. The easy-open type closure liner (50) according to claim 1, wherein the sealing layer (320) is a hot melt glue or a combination of a sealing film (321) and an adhesive (322), the material of the hot melt glue is at least one selected from the group consisting of Ethylene Vinyl Acetate copolymer (EVA), Polyisobutylene (PIB), Ethylene Butyl Acrylate Copolymer (EBA), EAA, EMAC, Polyacrylate, PolyAcetate and EMAA, the material of the sealing film (321) is at least one selected from the group consisting of PE, PP, PA, Polyvinylidene Chloride (PVDC), Ethylene Vinyl Alcohol Copolymer (EVOH), and PET, and the adhesive (322) is disposed between the sealing film (321) and the electromagnetic induction heating layer (310).

11. The easy-open type closure liner (50) according to claim 1, wherein through the bonding adhesive (210), the peel strength between the upper layer (100) and the sealing laminated layer (300) is greater than or equal to 17.8 N/15 mm.

12. The easy-open type closure liner (50) according to claim 1, wherein the wireless information integrated flake (100w') further comprises a protective layer (5w) and a second adhesive layer (4w), the protective layer (5w) is located on one side, away from the base film (1w), of the information and heating layer (3w), and the second adhesive layer (4w) is located between the information and heating layer (3w) and the protective layer (5w).

13. The easy-open type closure liner (50) according to claim 1, wherein the spacing (ITV) is a space between the outermost edge of the information area (31w) and the innermost edge of the electromagnetic induction heating ring (32w), and ranges from 0.1 mm to 3 mm.

14. The easy-open type closure liner (50) according to claim 1, wherein the spacing (ITV) fully occupies the position between the electromagnetic induction heating ring (32w) and the information area (31w).

15. The easy-open type closure liner (50) according to claim 1, wherein the information and heating layer (3w) further comprises at least one physical connecting bridge (33w) which is used for connecting the information area (31w) to the electromagnetic induction heating ring (32w).
